**Europäisches Patentamt**

**European Patent Office**

**Office européen des brevets**

(19)

(11) Veröffentlichungsnummer: **0 269 857 B1**

# EUROPÄISCHE PATENTSCHRIFT

(12)

(45) Veröffentlichungstag der Patentschrift: **27.03.91**

(51) Int. Cl.5: **B62D 1/18**

(21) Anmeldenummer: **87115794.7**

(22) Anmeldetag: **28.10.87**

(54) **Deformationsglied für Lenkwellen in Sicherheitslenksäulen von Kraftfahrzeugen.**

(30) Priorität: **08.11.86 DE 3638161**

(43) Veröffentlichungstag der Anmeldung:
**08.06.88 Patentblatt 88/23**

(45) Bekanntmachung des Hinweises auf die
Patenterteilung:
**27.03.91 Patentblatt 91/13**

(84) Benannte Vertragsstaaten:
**ES FR GB IT SE**

(56) Entgegenhaltungen:
**AU-A- 531 319       DE-A- 2 318 385**
**FR-A- 2 180 189     FR-A- 2 346 608**
**FR-A- 2 463 708     US-A- 3 972 390**
**US-A- 4 312 430**

(73) Patentinhaber: **Lemförder Metallwaren AG**
**Postfach 1220**
**W-2844 Lemförde(DE)**

(72) Erfinder: **Hucklenbroich, Hans**
**Roggenkamp 2**
**W-2842 Lohne(DE)**

(74) Vertreter: **Bruse, Willy Hans Heinrich**
**Edisonstrasse 14**
**W-2800 Bremen 33(DE)**

**Beschreibung**

Die Erfindung betrifft ein Deformationsglied aus Metall für Lenkwellen in Sicherheitslenksäulen von Kraftfahrzeugen mit Gattungsmerkmalen nach dem Oberbegriff des Patentanspruches 1.

Ein Deformationsglied mit diesen Gattungsmerkmalen ist aus der FR-PS 21 80 189 und auch aus der DE-OS 23 18 385 bekannt. Die hieraus bekannten Deformationsglieder sind jedoch aus mehreren geformten Blechteilen zusammengesetzt und mit Anschlußstücken an beiden Enden zusammengefügt. Eine solche Herstellung des Deformationsgliedes ist teuer, und das Produkt genügt den gestiegenen Anforderungen an die Verhaltenscharakteristik bei einem Crash nicht mehr.

Gebräuchlich sind auch metallische Lenkwellen mit einem Deformationsglied aus einem Wellrohr, welches sich im Kollisionsfalle zusammenschiebt und/oder verformt, um dadurch die Lenkwelle in ihrer Länge zu reduzieren, und zwar durch Zusammenschieben und/oder Anknicken.

Aufgabe der Erfindung ist die Ausbildung einer kostengünstig herstellbaren metallischen Lenkwelle mit einem Deformationsglied, welches hohen Sicherheitsanforderungen genügt und extrem kurze Einbaulängen ermöglicht.

Diese Aufgabe wird erfindungsgemäß durch Ausbildungsmerkmale nach dem Kennzeichen des Patentanspruches 1 gelöst.

Ein Deformationsglied mit diesen Ausbildungsmerkmalen ist durch spanlose Verformung bzw. Formgebung, insbesondere durch Schmieden oder einem vergleichbaren Arbeitsverfahren, kostengünstig herzustellen und andererseits so steif auszulegen, daß die im Fahrbetrieb auftretenden Lenkkräfte, insbesondere Drehmomente und Axialkräfte, ohne Schwierigkeiten übertragen werden. Andererseits kann das Anknicken des Deformationsgliedes bei höheren Axialkräften relativ genau bestimmt werden, so daß das Deformationsglied bei einer bestimmten Axialkraft anknickt und dadurch verhindert, daß der Lenkstrang im Kollisionsfalle nach hinten in den Fahrgastraum verschoben wird. Von besonderem Vorteil ist die Unterbringung eines solchen Deformationsgliedes auf kürzester Baulänge, ohne daß dadurch Nachteile hinsichtlich der Sicherheitsanforderungen an das Deformationsglied in Kauf genommen werden müssen. Das Deformationsglied kann dabei beidendig unmittelbar an ein Verbindungsglied angesetzt werden oder Verbindungsglieder aufweisen, so daß es z.B. eine Lenkzwischenwelle mit kurzer Baulänge bildet. Beide Enden des rautenförmigen Deformationsgliedes können z.B. einen angeformten Zapfen einer Gelenkgabel aufweisen, oder es kann an dem einen Ende ein Flansch zur Befestigung von Mitteln für die Schwingungsentkopplung angeformt sein, z.B.

ein Flansch für die Aufnahme einer Hardyscheibe. Das Deformationsglied kann aber auch als Teil einer längeren Lenkwelle ausgebildet sein.

Vorwiegend sind die Erfindungsmerkmale auf die Ausbildung eines sich in einer Ebene erstreckenden Deformationsgliedes mit zwei Schenkeln gerichtet. Auch Deformationsglieder mit einem räumlich geformten Zwischenteil sind möglich. Es können mehr als zwei Schenkel räumlich angeordnet sein. Zum Zwecke einer einfachen Herstellung können zwei Schenkel eine Rautenform einschließen, wobei auch mehrere Rautenformen denkbar sind, deren Ebenen Winkel miteinander einschließen, und wobei die Schenkel eine Winkelanstellung gegenüber der Längsachse der Lenkzwischenwelle einnehmen. Anstelle einer Raute ist auch jede andere Form möglich, z.B. eine kreis-oder bogenförmige Ausbildung der Schenkel.

Einige Ausführungsbeispiele der Erfindung sind auf der Zeichnung dargestellt. Es zeigen:

Figur 1      eine Seitenansicht eines Deformationsgliedes in Rautenform,

Figur 2      eine Darstellung ähnlich Figur 1 als Lenkzwischenwelle mit Gabel- und Flanschanschluß,

Figur 3      eine Seitenansicht eines Deformationsgliedes in kreisbogenähnlicher Ausführung und

Figur 4      eine Seitenansicht eines Deformationsgliedes mit mehreren zueinander angeordneten Stegen.

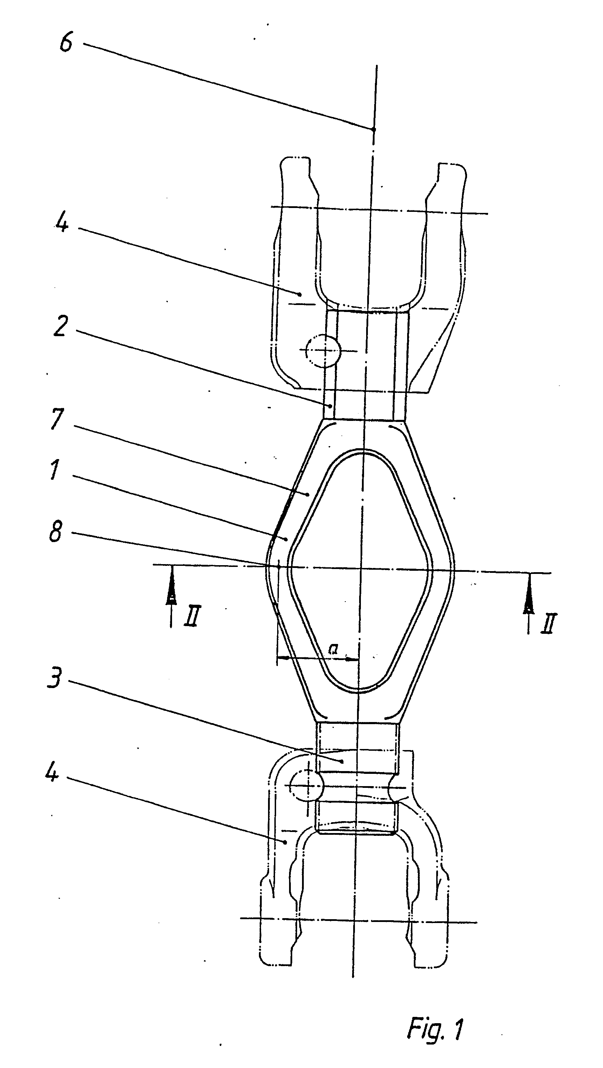

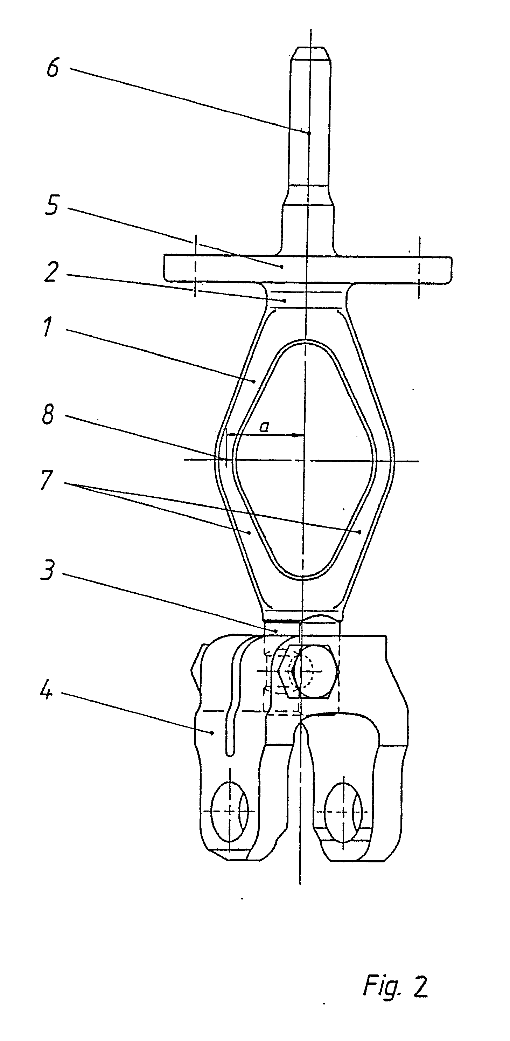

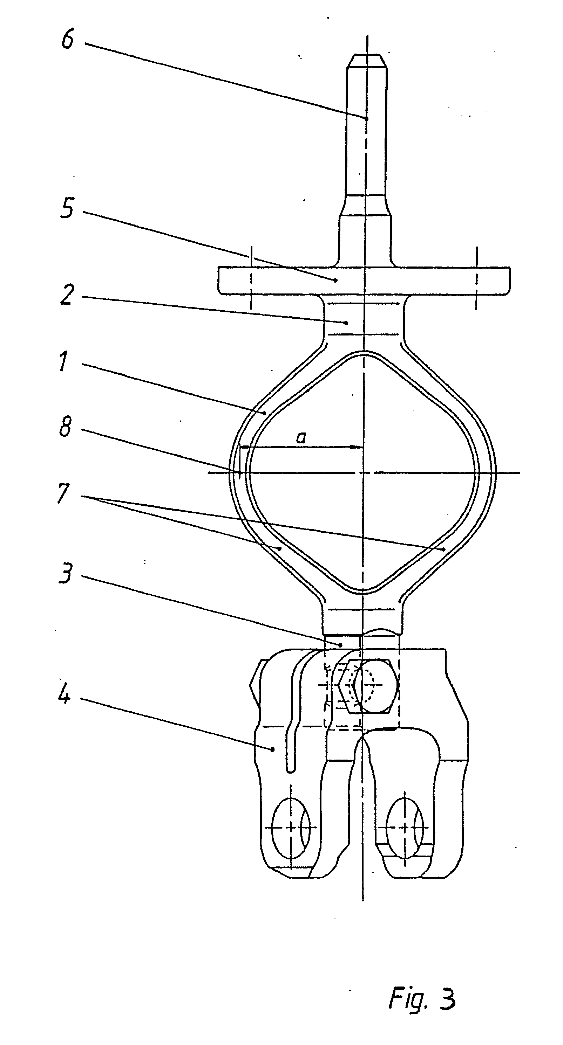

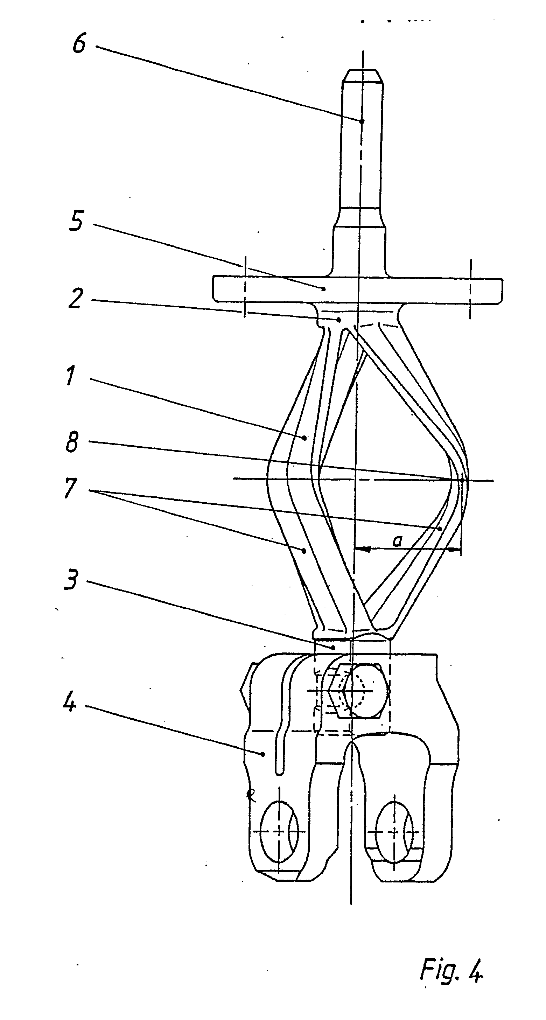

Die Lenkwellenabschnitte nach Figur 1, 3, 4 und 5 bestehen aus einem Deformationsglied 1 und Anschlußquerschnitten 2 und 3. Die in Längsachse 6 folgende Fortsetzung kann beidseits des Deformationsgliedes 1 aus Gabeln 4, Flanschen 5 oder Rohren bzw. Massivquerschnitten bestehen. Bei den verschiedenen Ausführungen können die Stege 7 im Verlauf der Längsachse 6 des Deformationsgliedes 1 gleichen oder unterschiedlichen Querschnitt und veränderlichen Abstand zur Längsachse 6 haben.

Im Bereich des größten Abstandes a von der Längsachse 6 des Deformationsgliedes 1 liegt die Sollknickstelle 8, wobei es sich besonders günstig auswirkt, wenn bei noch zu übertragendem Torsionsmoment diese Sollknickstelle 8 vom Querschnitt 9 der Stege 7 den größten Abstand a zur Wirkungslinie der Axialkraft hat. Es wird somit eine günstige Charakteristik des Deformationsgliedes für den angestrebten Sicherheitseffekt erreicht.

Bei einer besonderen Ausführungsform können die Stege 7 räumlich gedreht und/oder versetzt zueinander angeordnet sein. Auch eine Ausbildung, bei der die Stege 7 zur Längsachse 6 der Lenkwelle von innen nach außen und anschließend wieder nach innen bzw. von außen nach innen und anschließend wieder nach außen verlaufen, kann in besonderen Anwendungsfällen vorteilhaft sein.

## Ansprüche

1. Deformationsglied aus Metall für Lenkwellen in Sicherheitslenksäulen von Kraftfahrzeugen, welches zwischen Anschlußstücken an den beiden Enden im Verlauf der Längsachse der Lenkwelle aus Elementen besteht, die von der Längsachse der Lenkwelle unterschiedlichen Abstand und im Längsverlauf zur Lenkwelle unterschiedliche Querschnitte aufweisen und an der Stelle des größten Abstandes von der Längsachse eine Sollknickstelle bilden, dadurch gekennzeichnet, daß das Deformationsglied (1) mit den Anschlußstücken (3,5) einstückig aus schmiedbarem Metall geschmiedet oder preßverformt ist und Stege (7) mit zur Sollbruchstelle hin stetig abnehmendem Querschnitt aufweist.

2. Deformationsglied nach Anspruch 1, dadurch gekennzeichnet, daß die Stege (7) des Deformationsgliedes rautenförmig ausgebildet sind.

3. Deformationsglied nach Anspruch 1, dadurch gekennzeichnet, daß die Stege (7) des Deformationsgliedes kreis- oder bogenförmig ausgebildet sind.

4. Deformationsglied nach den Ansprüchen 1 bis 3, dadurch gekennzeichnet, daß die Stege (7) räumlich gedreht oder versetzt angeordnet sind.

5. Deformationsglied nach den Ansprüchen 1 bis 4, dadurch gekennzeichnet, daß die Stege (7) zur Längsachse (6) der Lenkwelle von innen nach außen und wieder nach innen oder von außen nach innen und wieder nach außen verlaufen.

## Claims

1. A deformation member made of metal for steering shafts in safety steering columns of motor vehicles, comprising elements arranged between connection members at both ends in the extension of the longitudinal axis of the steering shaft, which elements are arranged at different distances from the longitudinal axis of the steering shaft and have different cross sections in the longitudinal extension of the steering shaft and at the point of the greatest distance from the longitudinal axis form a predetermined bending point, characterised in that the deformation member (1) is integrally forged or press-moulded with the connection members (3, 5) from malleable metal and comprises webs (7) having a steadily decreasing cross section in the direction of the predetermined breaking point.

2. A deformation member according to claim 1, characterised in that the webs (7) of the deformation member (1) are diamond-shaped.

3. A deformation member according to claim 1, characterised in that the webs (7) of the deformation member (1) are circular or curved.

4. A deformation member according to claims 1 to 3, characterised in that the webs (7) are twisted three-dimensionally or arranged offset.

5. A deformation member according to claims 1 to 4, characterised in that the webs (7) extend in the direction of the longitudinal axis (6) of the steering shaft from the inside towards the outside and towards the inside again or from the outside towards the inside and towards the outside again.

## Revendications

1. Elément de déformation en métal pour des arbres de direction dans des colonnes de direction de sécurité de véhicules automobiles, qui est constitué, entre des pièces de raccordement aux deux extrémités, au cours de son développement dans le sens de l'axe longitudinal de l'arbre de direction, de parties qui présentent des éloignements différents de l'axe longitudinal de l'arbre de direction et des sections différentes au cours du développement longitudinal vers l'arbre de direction, et qui forment un point destiné au flambage à l'endroit d'éloignement maximal de l'axe longitudinal, caractérisé en ce que l'élément de déformation (1) est forgé ou formé à la presse en métal malléable, d'un seul tenant avec les pièces de raccordement (3, 5), et présente des nervures (7) de section diminuant continuellement vers le point destiné à la rupture.

2. Elément de déformation selon la revendication 1, caractérisé en ce que les nervures (7) de l'élément de déformation sont en forme de losange.

3. Elément de déformation selon la revendication 1, caractérisé en ce que les nervures (7) de l'élément de déformation ont une forme circulaire ou coudée.

4. Elément de déformation selon les revendications 1 à 3, caractérisé en ce que les nervures (7) sont disposées en étant décalées ou tournées dans l'espace.

5. Elément de déformation selon les revendications 1 à 4; caractérisé en ce que les nervures (7) s'étendent, en direction de l'axe longitudinal (6) de l'arbre de direction, de l'intérieur vers l'extérieur puis à nouveau vers l'intérieur, ou de l'extérieur vers l'intérieur puis à nouveau vers l'extérieur.

Fig. 1

*Fig. 2*

Fig. 3

*Fig. 4*